# EUROPÄISCHE PATENTSCHRIFT

(11) **EP 2 397 036 B1**
(45) Veröffentlichungstag und Bekanntmachung des Hinweises auf die Patenterteilung: **01.01.2014**
(21) Anmeldenummer: 11170175.1
(22) Anmeldetag: 16.06.2011
(51) Int. Cl.: A21B 3/13, A21D 8/06, A21B 5/02, A21B 1/02, A21B 5/00

(54) **Verfahren und Vorrichtung zur Herstellung von Kuchen mit Ausbund aus Rührmassen**
Method and device for the manufacture of cakes with a controlled crack made with batter mixtures
Procédé et dispositif pour produire des plats cuisinés avec une croûte fissurée utilisant la pâte à frire

(30) Priorität: 16.06.2010 DE 102010030157
(43) Veröffentlichungstag der Anmeldung: 21.12.2011
(73) Patentinhaber: Kuchnmeister Gmbh, ., 59494 Soest (DE)
(72) Erfinder: Trockels, Uwe, 10777 Berlin (DE); Trockels, Hans-Günter, 59494 Soest (DE)
(74) Vertreter: Gross, Felix

(56) Entgegenhaltungen:
- DE-U1- 29 924 425
- US-S1- D 535 849
- Gerhard Both ET AL: "Sandkuchen", Fehler bei Feinen Backwaren und deren Beseitigung, 1. Mai 2009 (2009-05-01), Seiten 35-35, XP55006708, [gefunden am 2011-09-09]

## Beschreibung

Die Erfindung betrifft ein Verfahren und eine Vorrichtung zur Herstellung von Kuchen mit Ausbund aus Rührmassen.

Charakteristisch für Kuchen aus Rührmassen ist das Verhältnis von Vollei, Getreidemahlerzeugnissen, Zucker und Fett. Die Anteile sind variabel und richten sich nach der gewünschten Qualität oder nach den in gesetzähnlichen Richtlinien festgelegten Rohstoffverhältnissen bzw. Mindestanteilen Wert bestimmender Rohstoffe.

Die äußere Form der aus den Rührmassen hergestellten Gebäcke ist unterschiedlich. Bekannte Formen sind Quader. Teilweise unterscheiden sich die Ober- und die Unterseite durch unterschiedliche Längen der parallel verlaufenden Linien an den Stirnflächen, so dass der Querschnitt dieser Formen ein Trapez bildet. Diese spezielle Kuchenform ist weit verbreitet und wird sowohl für die industrielle als auch für die handwerkliche Herstellung verwendet.

Eine weit verbreitete Kuchenart ist der Kuchen mit Ausbund. Diese Kuchenart hat eine gleichmäßige auf der Längsachse der Oberfläche elliptische ca. 50-80% der Länge des Kuchens verlaufende aufgerissene Oberfläche. Dieser Ausbund ist ein für diese Kuchenart typisches Qualitätsmerkmal. Der gleichmäßige Ausbund wird durch verschiedene verfahrenstechnische Prozessschritte erreicht. Dazu zählt der Temperaturverlauf über der Backzeit, die Steuerung der Wärmeübertragungsart (Verhältnis Konvektion - Strahlung), sowie die Bearbeitung der Oberfläche vor dem Backprozess. Dabei wird die Oberfläche auf der Mittelachse zum Beispiel mit Zucker bestreut oder mit einer schmalen ca. 1 - 2 mm tiefen Fettspur versehen. Ein weiteres bekanntes Verfahren ist das gezielte, gleichmäßige Einschneiden der Oberfläche während des Backprozesses, nachdem sich durch Proteindenaturierung und Stärkegelbildung eine dünne Haut auf der Oberfläche gebildet hat. Dazu muss der Backprozess unterbrochen werden.

Der Nachteil der bekannten Verfahren besteht in dem erhöhten technischen Aufwand. So ist es ungünstig, den Backprozess zu unterbrechen. Weiterhin können die Kuchen bei einer industriellen Herstellung nicht unmittelbar nach dem Backprozess gestürzt werden. Die Kuchen werden deshalb mit einer Hebevorrichtung aus den Backformen herausgelöst, indem die Kuchen vom Boden der Backform durch Stempel, die den Boden der Backform bilden, in Richtung der Backformoberkante gedrückt und von dort mittels Transportbändern weiter gefördert werden. Um eine Trennung der Kuchen von der Backform zu ermöglichen und ein Auslaufen der Kuchenmasse aus den Schlitzen zwischen dem Stempel und der Wand der Backform zu verhindern, werden Papiereinleger verwendet.

Weiterhin sind aufgrund der komplexen rezepturbedingten Rohstoffzusammensetzungen und der Qualitätsschwankungen der Rohstoffe Ungleichmäßigkeiten in der Ausbildung des Ausbundes zu verzeichnen. Dazu zählen ungleichmäßig ausgebildeter Ausbund, Seitenrisse auf der Gebäckoberfläche und ungleichmäßige Gebäckfarbe.

Der Erfindung liegt die Aufgabe zugrunde, den Ausbund an Rührkuchen mit geringerem technischem Aufwand und mit gleichbleibender Qualität zu erreichen.

Erfindungsgemäß wird das mit den Merkmalen der Ansprüche 1 und 4 erreicht.

Ein Verfahren zur Herstellung von Kuchen mit Ausbund aus Rührmassen ist erfindungsgemäß dadurch gekennzeichnet, dass die Oberfläche des Kuchens mit dem dort vorgesehenen Ausbund durch Wärmeleitung gebacken wird.

Durch die Ausnutzung der Wärmeleitung zum Backen der Oberfläche des Kuchens wird ein gleichmäßigerer Wärmetransport und damit verbunden eine gleichmäßigere Intensität der Backfarbe erreicht. Die spätere Oberfläche des Kuchens bildet während des Backens die Unterseite des Kuchens. Durch die Ausnutzung der Wärmeleitung erfolgt eine effizientere Wärmeübertragung, wodurch Energie eingespart wird. Die Wärmeübertragung beeinflusst die Gestaltung des Oberflächenausbundes und kompensiert die notwendigen Steuerungen der klimatischen Zustandsänderungen während des Backprozesses, die bei den Backverfahren des Standes der Technik erforderlich wären.

Die Rührmassen werden vor dem Backprozess in Backformen eingebracht, die die gewünschte Ausbundform an der Auflagefläche zum Wärmeträger aufweisen. Dadurch entsteht ein definierter, konturenstabiler Ausbund, der in Abhängigkeit der Backform bei jedem Produktionsprozess die exakte Oberflächenstruktur garantiert.

Die Entleerung der Backformen erfolgt vorzugsweise durch deren Umstürzen um 180°. Das war bei den bekannten Verfahren nicht möglich, da dann die Gefahr bestand, dass die Oberfläche des Kuchens beschädigt wird. Zur Erleichterung der Entleerung kann die Backform in bekannter Weise beschichtet sein oder kann aus Silikon bestehen. Gegenüber dem Backverfahren des Standes der Technik, bei dem ein Stempel zum Herauslösen des gebackenen Kuchens aus der Backform den Boden der Backform bildet, können Papiereinleger eingespart werden.

Eine Vorrichtung zur Herstellung von Kuchen mit Ausbund aus Rührmassen ist dadurch gekennzeichnet, dass eine Backform oder aus mehreren Formen bestehende Backformen verwendet werden, die das Negativelement der gewünschten Kuchenform bilden, wobei das Negativelement am Boden jeder Backform entsprechend der gewünschten Ausbundform geprägt ist.

Bei der Herstellung von Kuchen mit Ausbund unter Verwendung von Backformen als Negativelement wird auch ein frühzeitiges Entfeuchten der Backkruste am Ausbund verhindert. Dieses Phänomen tritt bei Verfahren des Standes der Technik zur Herstellung von Kuchen mit Ausbund als Gebäckfehler auf und kann zu erheblichen Rohstoff- bzw. Fertigproduktverlusten führen. Bei einer zu frühen Entfeuchtung der Gebäckoberfläche und der darunter liegenden Grenzschichten zur Gebäckkrume ist für die Stärkeverkleisterung zu wenig Wasser vorhanden. Die Stärkekörner verbleiben im kristallinen bzw. amorphen Zustand ohne zu verkleistern. Infolge der geringen Wasserverfügbarkeit wird der Verkleisterungszeitpunkt und die Verkleisterungstemperatur soweit verschoben, dass während des Backprozesses eine vollständige Verkleisterung der Stärke im Bereich des Ausbundes nicht stattfinden kann. In diesen Bereichen wird eine Verdichtung und "Glasigkeit" der Gebäckschichten festgestellt, die als Qualitätsmängel empfunden werden. Im Gegensatz zu den bekannten Verwendungen von Backformen für z.B. Stollen, handelt es sich bei den Rührkuchen um ein thermisches Verfahren mit dem Ziel eines definierten Aufreißens der Kruste durch die thermodynamische Prozessteuerung und der Vorbehandlung der Oberfläche vor dem Backprozess z.B. durch Auftragen eines Ölstreifens oder Auftragen eines Zuckerstreifens. Diese Prozessschritte werden beim erfindungsgemäßen Verfahren eingespart.

Ein weiterer Vorteil des Verfahrens und der erfindungsgemäßen Backform bildet die Gestaltung der nachfolgenden Prozesse. Infolge der exakten Oberflächengestaltung der Kuchen ist eine partielle Oberflächengestaltung, wie Schokolieren der Oberfläche mit Aussparung des Ausbundes oder Bezuckern der Oberfläche ohne Ausbund auch in hoch mechanisierten und automatisierten Prozessabläufen möglich.

Vorzugsweise weist das Negativelement am Boden eine Wölbung in Längsrichtung jeder Backform und Wölbungen in Querrichtung jeder Backform auf. Weiterhin ist es zweckmäßig, dass das Negativelement am Boden jeder Backform in deren Längsrichtung Einwölbungen und zwischen diesen Einwölbungen einen Einschnitt aufweist.

Zusätzlich können die Backformen mit Schlitzen versehene Deckel aufweisen. Die Schlitze ermöglichen das Entweichen von Wasserdampf während des Backprozesses. Dieses Verfahren ist bei der Herstellung von Toastbrot, Stollen oder Rührkuchen ohne Ausbund bekannt. Bei der Herstellung von Kuchen mit Ausbund kann es bei den Verfahren des Standes der Technik nicht angewendet werden, da der Ausbund über die Kuchenform hinausragt. Der Vorteil der Bedeckelung liegt in der gesättigten Dampfatmosphäre, der der Kuchen während des Backprozesses ausgesetzt ist. Im Sattdampfbereich der Atmosphäre wird eine frühe Karamellisierung der Kuchenoberfläche verhindert und damit einer Verbrennung oder unterschiedlicher Backfarbenintensität entgegen gewirkt. Die Heißdampfphase und damit die Erhitzung des Kuchens über 100°C treten zeitverzögert ein.

Es ist zweckmäßig, dass den Backformen eine Stürz- oder Wendevorrichtung zugeordnet ist.

Die Erfindung soll in einem Ausführungsbeispiel an Hand von Zeichnungen erläutert werden. Es zeigen:
- Fig. 1: einen Längsschnitt durch eine Backform mit Deckel;
- Fig. 2: einen Querschnitt durch den mittleren Abschnitt II-II der Backform der Fig. 1 in einem gegenüber der Fig.1 vergrößerten Maßstab;
- Fig. 3: eine Draufsicht auf die Backform nach Fig. 1.

Eine Backform 1 für Rührmassen weist wie üblich zwei Querwände 2 und 3 und zwei Längswände 4 und 5 auf. Neu gegenüber den üblichen Backformen ist, dass ein Boden 6 vorgesehen ist, der sowohl in Längsrichtung eine Wölbung 7 als auch in Querrichtung Wölbungen 8 aufweist. Der Boden 6 weist weiterhin die Nachbildung der in Längsrichtung aufgerissenen Struktur des Ausbundes des gebackenen Kuchens und somit die Negativform des gewünschten Ausbundes des gebackenen Kuchens auf. Der Boden weist deshalb zwei sich in die Backform erstreckende Wölbungen 9 und 10 und zwischen diesen einen Einschnitt 11 auf. Zu den Enden der Kuchenform verringert sich die Breite der Wölbungen 9, 10, so dass sich in der Draufsicht ein etwa elliptischer Verlauf der Ränder 12, 13 der Wölbungen 9, 10 ergibt.

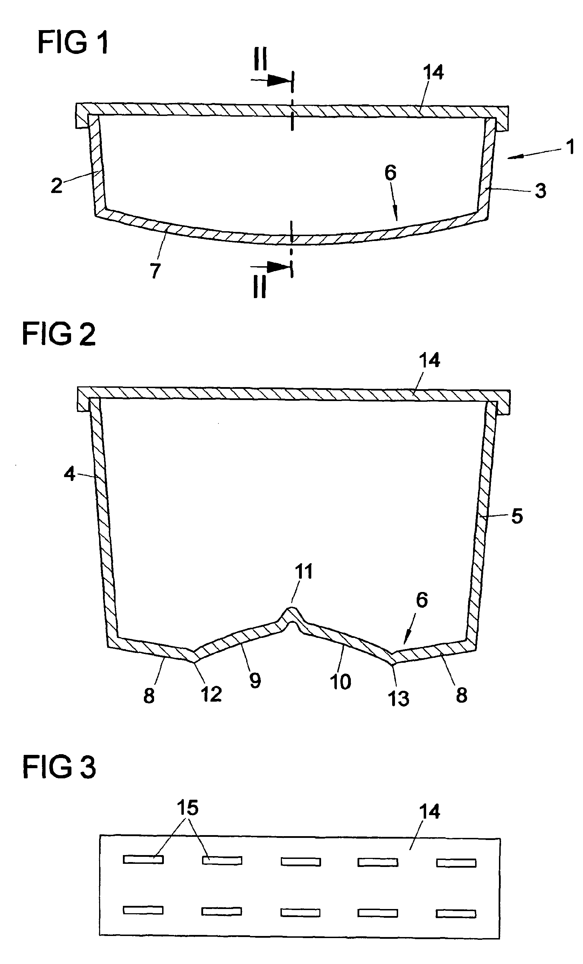

Die Fig. 3 zeigt die Draufsicht auf die Backform der Fig. 1. Es ist lediglich ein Deckel 14 erkennbar, der die Backform während des Backvorganges oben abschließt. Der Deckel 14 weist Schlitze 15 auf, die das Entweichen von Wasserdampf während des Backvorganges ermöglichen

### Bezugszeichenliste

- 1: Backform
- 2: Querwand
- 3: Querwand
- 4: Längswand
- 5: Längswand
- 6: Boden
- 7: Wölbung in Längsrichtung
- 8: Wölbungen in Querrichtung
- 9: Wölbung
- 10: Wölbung
- 11: Einschnitt
- 12: Rand der Wölbung 9
- 13: Rand der Wölbung 10
- 14: Deckel
- 15: Schlitze

## Patentansprüche

1. Verfahren zur Herstellung von Kuchen mit Ausbund aus Rührmassen,
**dadurch gekennzeichnet, dass** die Oberfläche des Kuchens mit dem dort vorgesehenen Ausbund durch Wärmeleitung gebacken wird.

2. Verfahren nach Anspruch 1, **dadurch gekennzeichnet, dass** die Rührmassen vor dem Backprozess in Backformen eingebracht werden, die die gewünschte Ausbundform an der Auflagefläche zum Wärmeträger aufweisen.

3. Verfahren nach Anspruch 1 oder 2, **dadurch gekennzeichnet, dass** die Entleerung der Backformen durch deren Umstürzen um 180° erfolgt.

4. Vorrichtung zur Herstellung von Kuchen mit Ausbund aus Rührmassen, insbesondere zur Durchführung des Verfahren nach den Ansprüchen 1 bis 3,
**dadurch gekennzeichnet,**
**dass** eine Backform (1) oder aus mehreren Formen bestehende Backformen verwendet werden, die das Negativelement der gewünschten Kuchenform bilden, wobei das Negativelement (7, 8, 9, 10, 11) am Boden (6) jeder Backform entsprechend der gewünschten Ausbundform geprägt ist.

5. Vorrichtung nach Anspruch 4, **dadurch gekennzeichnet, dass** das Negativelement am Boden (6) eine Wölbung (7) in Längsrichtung jeder Backform (1) und Wölbungen (8) in Querrichtung jeder Backform (1) aufweist.

6. Vorrichtung nach Anspruch 4 oder 5, **dadurch gekennzeichnet, dass** das Negativelement am Boden (6) jeder Backform (1) sich in deren Längsrichtung erstreckende Einwölbungen (9, 10) und zwischen diesen Einwölbungen einen Einschnitt (11) aufweist.

7. Vorrichtung nach mindestens einem der Ansprüche 4 bis 6, **dadurch gekennzeichnet, dass** die Backformen mit Schlitzen (15) versehene Deckel (14) aufweisen.

8. Vorrichtung nach mindestens einem der Ansprüche 4 bis 7, **dadurch gekennzeichnet, dass** den Backformen eine Stürz- oder Wendevorrichtung zugeordnet ist.

## Claims

1. Method for the production of cakes with an indent using sponge mixtures, **characterized in that** the surface of the cake with the indent provided thereon is baked by heat conduction.

2. Method according to Claim 1, **characterized in that** the sponge mixtures are introduced, prior to the baking process, into baking forms which have the desired indent shape on their surface which is in contact with the heat transfer medium.

3. Method according to Claim 1 or 2, **characterized in that** the baking forms are emptied by being turned over through 180°.

4. Device for the production of cakes with an indent using sponge mixtures, in particular for implementing the method according to Claims 1 to 3, **characterized in that** use is made of a baking form (1), or of multiple-cavity-containing baking forms, forming the negative element of the desired cake shape, wherein the negative element (7, 8, 9, 10, 11) is made on the base (6) of each baking form in accordance with the desired indent shape.

5. Device according to Claim 4, **characterized in that** the negative element on the base (6) has a curved progression (7) in the longitudinal direction of each baking form (1) and curved progressions (8) in the transverse direction of each baking form (1).

6. Device according to Claim 4 or 5, **characterized in that** the negative element on the base (6) of each baking form (1), has concavities (9, 10), which extend in the longitudinal direction of the baking form, and a recess (11) between these concavities.

7. Device according to at least one of Claims 4 to 6, **characterized in that** the baking forms have covers (14) provided with slits (15).

8. Device according to at least one of Claims 4 to 7, **characterized in that** the baking forms are assigned a turning or upending device.

## Revendications

1. Procédé de préparation de gâteaux avec une croûte de pâte fissurée constituée de pâte à gâteaux,
**caractérisé en ce que** la surface du gâteau prévue avec la croûte de pâte fissurée est cuite par conduction thermique.

2. Procédé selon la revendication 1, **caractérisé en ce que** les pâtes à gâteaux sont introduites dans des moules de cuisson avant la cuisson, lesquels moules de cuisson présentent la forme souhaitée de la croûte de pâte fissurée au niveau de la surface de contact avec le support caloporteur.

3. Procédé selon la revendication 1 ou 2, **caractérisé en ce que** le démoulage des moules de cuisson s'effectue en les retournant de 180°.

4. Dispositif de préparation de gâteaux avec une croûte de pâte fissurée constituée de pâte à gâteaux, en particulier pour mettre en oeuvre le procédé selon les revendications 1 à 3,
**caractérisé en ce qu'**
un moule de cuisson (1) ou des moules de cuisson constitués de plusieurs moules sont utilisés, lesquels forment l'élément négatif de la forme du gâteau souhaitée, l'élément négatif (7, 8, 9, 10, 11) étant imprimé au fond (6) de chaque moule de cuisson de manière correspondant à la forme de la croûte de pâte fissurée souhaitée.

5. Dispositif selon la revendication 4, **caractérisé en ce que** l'élément négatif au fond (6) présente une courbure (7) dans la direction longitudinale de chaque moule de cuisson (1) et des courbures (8) dans la direction transversale de chaque moule de cuisson (1).

6. Dispositif selon la revendication 4 ou 5,
**caractérisé en ce que** l'élément négatif au fond (6) de chaque moule de cuisson (1) présente des renfoncements (9, 10) s'étendant dans sa direction longitudinale et entre ces renfoncements une entaille (11).

7. Dispositif selon au moins l'une quelconque des revendications 4 à 6, **caractérisé en ce que** les moules de cuisson présentent un couvercle (14) pourvu de fentes (15).

8. Dispositif selon au moins l'une quelconque des revendications 4 à 7, **caractérisé en ce que** l'on associe aux moules de cuisson un dispositif de retournement ou de renversement.
